# EUROPEAN PATENT APPLICATION

(11) **EP 2 813 396 A2**
(43) Date of publication of application: **17.12.2014**
(21) Application number: 13746048.1
(22) Date of filing: 07.02.2013
(51) Int. Cl.: B60Q 1/52

(54) **VEHICLE LIGHT SYSTEM**

(30) Priority: 07.02.2012 JP 2012024090
(71) Applicant: Jiro Collection Ltd., Utsunomiya-shi, Tochigi 320-0051 (JP)
(72) Inventor: The designation of the inventor has not yet been filed
(74) Representative: Hague, Alison Jane
(86) International application number: PCT/JP2013/052886
(87) International publication number: WO 2013/118827

(57) **Abstract**

Provided is a vehicle lighting system that has lights additionally provided at predetermined positions besides existing lights such as a headlight or a brake lamp and performs lighting based on a lighting operation or automatic lighting under predetermined conditions.

A lighting system in a vehicle 1 includes concave portion lights 12, which emit lights to a lateral side, provided on a concave portion surface 11 that allows fingers to be inserted therein behind a grip portion 13 in a door knob part 10, and it can adopt a configuration that the concave portion lights 12 emit the lights in accordance with a direction indicator operation or a hazard switch operation or the concave portion lights 12 automatically emit the lights when predetermined conditions are detected.

## Description

### TECHNICAL FIELD

The present invention relates to a lighting system of a light in a vehicle, and more particularly to a vehicle lighting system that has lights additionally provided at predetermined positions besides exiting lights such as a headlight, a brake lamp, and others and performs lighting based on a lighting operation or automatic lighting under predetermined conditions.

### BACKGROUND ART

As lights in conventional vehicles, there are a headlight, a winker lamp, a brake lamp, a backing light, a fog lamp, and others, and lighting is effected by performing a lighting operation. These various kinds of lights are provided with roles/functions based on lighting, respectively and they perform lighting in accordance with each use purpose.

Meanwhile, such vehicle lamps are turned on by a lighting operation performed by a driver or a passenger, e.g., manipulating a direction indicator or pressing a hazard lighting switch. Therefore, in case of, e.g., informing other vehicles of presence of a vehicle damaged by a vehicle accident, likewise, a hazard lamp is not turned on and other vehicles cannot be informed unless a driver or a passenger presses the hazard lighting switch. However, a driver or a passenger of the damaged vehicle lacks an appropriate response capability after the accident due to lost in abstraction or a degree of injuries caused by the accident, and it is not necessarily the case that the lighting operation can be performed. Therefore, there is a risk that an appropriate accident response cannot be made since the lighting operation cannot be effected and a rear-end collision of a following vehicle is allowed.

To avoid such a risk, such a technology for automatically informing other vehicles of an accident condition as described in each of Patent Literatures 1 to 3 has been conventionally suggested. That is, the technology described in each of Patent Literatures 1 to 3 is a technology for sensing a vehicle impact shock given by an accident and automatically blinking or lighting a hazard lamp or a brake lamp. According to this conventional technology, other vehicles can be assuredly informed of an accident condition of a vehicle without performing a lighting operation by a driver or a passenger.

However, the exiting lights in a vehicle including a hazard lamp or a brake lamp are mounted to emit lights toward a front or a rear side because of the respective purposes, and the lights are not mounted for the purpose of emitting lights to a lateral, upper, and lower sides. Therefore, for example, when a vehicle accident has occurred and a damaged vehicle has spun and turned over on its side or overturned, even though lighting is effected in the front and rear directions alone, the lighting cannot be visually confirmed from a following car and is meaningless as emergency lights, and there is concern that the following car collides with the damaged car from behind. Further, during nighttime or occurrence of thick fog, the risk increases and multiple rear-end accidents may possibly occur.

Meanwhile, there is also a vehicle equipped with a winker lamp (a hazard lamp) on a door mirror. According to such a vehicle, lighting of the winker lamp (the hazard lamp) can be visually recognized from a lateral side to some extent.

However, since the door mirror is structurally provided to protrude from the vehicle, there is a risk that it is the first to be destroyed when a vehicle accident occurs. Therefore, the winder lamp (the hazard lamp) provided to the door mirror cannot be expected much to exercise a function as an emergency lamp at the time of an accident.
Patent Literature 1: Japanese Unexamined Patent Application Publication No. 2000-276682
Patent Literature 2: Japanese Unexamined Patent Application Publication No. Hei 11-42970
Patent Literature 3: Japanese Unexamined Patent Application Publication No. Hei 6-40290

### DISCLOSURE OF INVENTION

### PROBLEM TO BE SOLVED BY THE INVENTION

In view of the above-described drawback, it is an object of the present invention to provide a vehicle lighting system that has lights additionally provided at predetermined positions besides exiting lamps such as a headlight or a brake lamp and performs lighting based on a lighting operation or automatic lighting under predetermined conditions.

### MEANS FOR SOLVING PROBLEM

To achieve the object, according to the present invention of claim 1, there is provided a lighting system in a vehicle comprising a concave portion light, which emits light to a lateral side, provided on a surface of a concave portion that allows fingers to be inserted therein behind a grip portion in a door knob part, wherein the concave portion light emits the light in accordance with a direction indicator operation or a hazard switch operation or the concave portion light automatically emits the light when predetermined conditions are detected.

Further, according to the present invention of claim 2, the vehicle lighting system comprises a grip portion light, which emits light to the lateral side or a lower side, provided on the grip portion in the door knob part, and adopts a configuration that the grip portion light emits the light in accordance with the direction indicator operation, the hazard switch operation, or a back gear operation, or the grip portion light automatically emits the light when the predetermined conditions are detected.

Furthermore, according to the present invention of claim 3, the vehicle lighting system comprises a door mirror light, which emits light to a rear side, provided at a predetermined position on a frame body of a door mirror, and adopts a configuration that the door mirror light emits the light in accordance with the back gear operation or the door mirror light automatically emits the light when the predetermined conditions are detected.

Moreover, according to the present invention of claim 4, the vehicle lighting system comprises a ceiling light, which emits the light to an upper side, provided at a predetermined position on a vehicle ceiling portion, and adopts a configuration that the ceiling light automatically emits light when the predetermined conditions are detected.

Additionally, according to the present invention of claim 5, the vehicle lighting system comprises a window frame light, which emits light to the upper side, provided at a predetermined position on each window frame of one or both of a windshield or a rear glass, and adopts a configuration that the window frame light automatically emits the light when the predetermined conditions are detected.

Further, according to the present invention of claim 6, the vehicle lighting system comprises a bottom portion light, which emits light to the lower side, provided at a predetermined position on a vehicle bottom portion, and adopts a configuration that the bottom portion light automatically emits the light when the predetermined conditions are detected.

Furthermore, according to the present invention of claim 7, the vehicle lighting system comprises a blinking pattern control device, and adopts a configuration that blinking patterns of the various kinds of lights that automatically emit the lights when the predetermined conditions are detected are controlled.

Moreover, according to the present invention of claim 8, the vehicle lighting system comprises an emergency sound generation device, and adopts a configuration that emergency sound is generated from the emergency sound generation device in tandem with the various kinds of lights that automatically emit the lights when the predetermined conditions are detected.

### EFFECT OF THE INVENTION

According to the vehicle lighting system of the present invention, the lights that emit lights in the lateral direction or the upper and lower directions are additionally provided at predetermined positions besides the exiting lights that emit lights in the front and rear directions, e.g., the headlight or the brake lamp, the lights are lighted based on the lighting operation or automatically lighted under the predetermined conditions, and the blinking patterns of the lights are controlled as required, and hence other vehicles can assuredly recognize presence of a user' s vehicle, intention of traveling, or presence of a damaged vehicle, thus exerting the excellent effect to avoid occurrence of rear-end accidents.

### BRIEF DESCRIPTION OF DRAWINGS

FIG. 1 is an explanatory view showing a first embodiment of a vehicle lighting system according to the present invention (Embodiment 1);
FIG. 2 is a plane cross-sectional view showing the first embodiment of the vehicle lighting system according to the present invention (Embodiment 1);
FIG. 3 is an explanatory view showing a second embodiment of the vehicle lighting system according to the present invention (Embodiment 2);
FIG. 4 is a perspective view showing a third embodiment of the vehicle lighting system according to the present invention (Embodiment 3);
FIG. 5 is a perspective view showing a fourth embodiment of a vehicle lighting system according to the present invention (Embodiment 4);
FIG. 6 is an explanatory view showing a fifth embodiment of a vehicle lighting system according to the present invention (Embodiment 5); and
FIG. 7 is an explanatory view showing a sixth embodiment of a vehicle lighting system according to the present invention (Embodiment 6).

### BEST MODE(S) FOR CARRYING OUT THE INVENTION

The greatest characteristic of a vehicle lighting system according to the present invention lies in that a light is additionally provided at a predetermined position, especially in a door knob part 10 besides existing lights such as a headlight or a brake lamp to enable lighting, thereby avoiding an occurrence of multiple accidents such as a double rear-end collision. The vehicle lighting system according to the present invention will now be described hereinafter in detail with reference to the drawings.

It is to be noted that the present invention is not restricted to configurations described in the following embodiments in particular, and it can be arbitrarily changed without departing from the gist of the technical concept of the present invention. For example, a vehicle in the present invention can be considered to include not only a passenger car but also all vehicle concepts such as a bus, a truck, a motorcycle, and others.

### EMBODIMENT 1

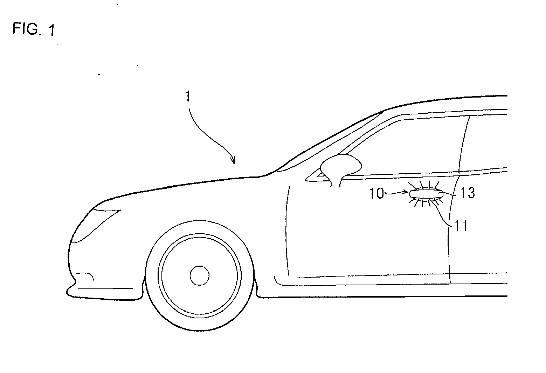

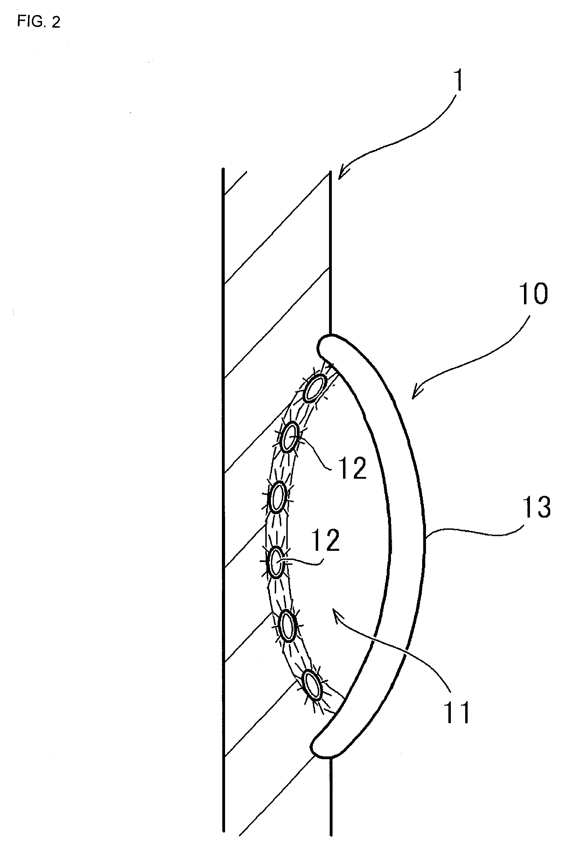

FIG. 1 is an explanatory view showing a first embodiment of a vehicle lighting system according to the present invention, and FIG. 2 is a plane cross-sectional view.

A vehicle lighting system according to this embodiment has concave portions lights 12 provided on a concave portion surface 11, into which fingers can be inserted, behind a grip portion 13 in a door knob part 10 of a vehicle 1. The concave portion lights 12 emit lights to a lateral side, and the concave portion lights 12 basically emit lights in tandem with lighting of a winker lamp effected by operating a direction indicator or lighting of a hazard lamp effected by operating a hazard switch.

Although LEDs are preferably used for the concave portion lights 12, these lights are not restricted thereto in particular, and the number of these lights is one or more and not restricted.

Furthermore, as regards lighting modes of the concave portion lights 12, blinking and lighting in the same manner as the winker lamp or the hazard lamp is desirable since these lights are linked with the lamp, but a mode of continuous lighting without blinking can suffice.

Moreover, as to a color of the concave portion lights 12, using the same color as the winker lamp or the hazard lamp is preferable, but the color is not restricted in particular.

When the above-described concave portion lights 12 are provided, lights are emitted from a side surface of the vehicle 1 to the lateral side. Therefore, adjacent vehicles 1 that travel in parallel in a plurality of lanes can readily recognize lighting of the winker lamp, intention of lane changing or the like can be assuredly conveyed. Additionally, at the time of taking a right turn or a left turn, the vehicle 1 that approaches from the lateral side can be assuredly informed of lighting of the winker lamp. Further, if the vehicle 1 has spun and turned over on its side, a following vehicle can recognize lighting of the hazard lamp and can detect a danger.

The concave portion lights 12 are turned on/off by a driver or the like, and a system that lighting is automatically performed when predetermined conditions are detected can be also considered. The predetermined conditions described above are a condition that performing lighting is recommended or a condition that lighting should be performed, and various conditions can be considered. For example, if an impact shock of the vehicle 1 caused by an accident has been sensed, automatically lighting the concave portion lights 12 can be considered. Alternatively, a driver or the like is going to unlock the door, automatically lighting the concave portion lights 12 to brightly show the door knob part 10 can be also considered. The above-described automatic lighting system and a manual operation system, e.g. , the direction indicator or the hazard switch can coexist.

When the automatic lighting system is adopted for the concave portion lights 12, even if a driver or a passenger of the damaged vehicle 1 who has been injured or lost in abstraction due to, e.g., an accident lacks an appropriate response capability to the accident, the automatic lighting of the concave portion lights 12 enables other vehicles to automatically recognize presence of the damaged vehicle 1. Further, when the door knob part 10 is brightly shown on the unlocking stage before getting in the vehicle, the door knob part 10 can be easily recognized even in the dark. It is to be noted that, in case of, e.g., automatic lighting effected due to an accident, a mode of increasing luminous energy of the concave portion lights 12 beyond that in a normal state to further assuredly inform the outside of presence of the vehicle 1 can be also considered.

Meanwhile, in the vehicle lighting system according to the first embodiment including the concave portion lights 12, a mode further including a blinking pattern control device can be considered.

The blinking pattern control device is used for controlling a blinking pattern of the concave portion lights 12 at the time of an emergency, e. g. , an accident, and it informs the outside of the vehicle 1 of the emergency in the form of a visual alarm.

That is, in a case where the concave portion lights 12 have detected predetermined conditions (an accident in particular) and automatically emit lights, the blinking pattern control device functions so that the concave portion lights 12 blink and emit lights in accordance with a determined blinking pattern.

When such a blinking pattern control device is provided, lighting can be carried out in the blinking pattern that is different from blinking and lighting of the winker lamp or the hazard lamp in the normal state, other vehicles can recognize presence of the vehicle 1, and an SOS sending function, i.e., informing of a danger such as an emergency of the vehicle 1 can be also exercised.

Further, in the vehicle lighting system according to the first embodiment including the concave portion lights 12, a mode including an emergency sound generation device can be considered.

The emergency sound generation device is used for generating emergency sound at the time of an emergency such as an accident, and it informs the outside of the vehicle 1 of the emergency in the form of an auditory alarm.

That is, when the concave portion lights 12 have detected predetermined conditions (an accident in particular) and automatically emit lights, the emergency sound generation device generates emergency sound in tandem with the concave portion lights 12.

When such an emergency sound generation device is provided, in a scene that lights of the vehicle 1 are hard to be seen in thick fog or the like, generation of the emergency sound enables other vehicles to recognize presence of the vehicle 1, and the SOS sending function, i.e., informing residents or pedestrians around the vehicle 1 as well as other vehicles of an emergency of the vehicle 1 can be also exercised.

### EMBODIMENT 2

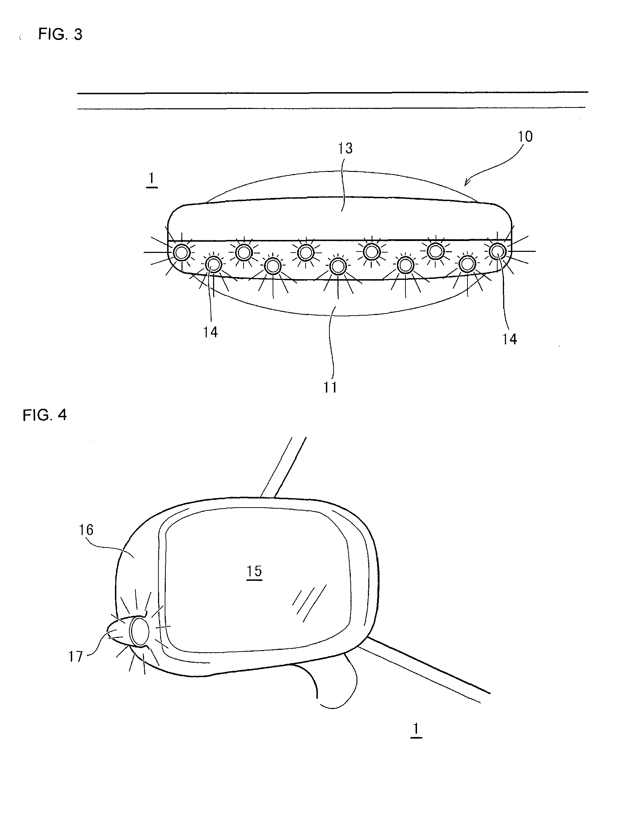

FIG. 3 is an explanatory view showing a second embodiment of the vehicle lighting system according to the present invention.

The vehicle lighting system according to this embodiment includes a grip portion lights 14 on a grip portion 13 in a door knob part 10 of a vehicle 1 in addition to the first embodiment. The grip portion lights 14 emit lights to a lateral side or a lower side, and the grip portion lights 14 basically emit lights by an operation of a direction indicator, an ON/OFF operation of a hazard switch, or an operation of putting a gearshift lever into reverse (backward movement) in tandem with lighting of a winker lamp, a hazard lamp, or a backing light. At this time, it is possible to consider a mode that the grip portion lights 14 emit lights to the lateral side alone in case of linking with the winker lamp or the hazard lamp or that the grip portion lights 14 emit light to the lower side alone in case of linking with the backing light alone.

It is to be noted that, since a later-described lighting effect of the grip portion lights 14 is exercised in the dark, a mode of linking with a small light (a width indicator) or a larger light only when such a small light or a larger light alone is lighted may be adopted.

Although LEDs are preferably used for the grip portion lights 14 , the present invention is not restricted in particular, and the number of the grip portion lights 14 may be one or more and not restricted.

Furthermore, although arrangement/a direction of each light source of the grip portion lights 14 is not restricted in particular, it is possible to consider that a direction of the grip portion lights 14 on the front side of the vehicle 1 is set to a slightly front direction and a direction of the grip portion lights 14 on the rear side of the vehicle 1 is set to a slightly rear direction, according to the shape of the grip portion 13.

In regard to a lighting mode of the grip portion lights 14, in case of linking with the winker lamp or the hazard lamp, blinking and lighting in the same manner as the winker lamp or the hazard lamp is desirable in case of linking with the lamp, but a mode of continuous lighting without blinking can suffice. Additionally, in case of linking with the backing light, a mode of emitting lights without blinking is desirable like the backing light.

Moreover, as to a color of the grip portion lights 14, using the same color as the winker lamp or the hazard lamp is preferable, but the color is not restricted in particular.

When the above-described grip portion lights 14 are provided, lights are emitted from a side surface of the vehicle 1 to the lateral side and the lower side. Therefore, other vehicles that approach from the lateral side can be easily informed of a direction indicator operation or a hazard switch operation of the vehicle 1, and lights are emitted to the lower side of the side surface of the vehicle 1 at the time of moving the vehicle 1 backward in the dark, e.g., at night so that a driver can easily recognize an obstacle, a gully, or the like near rear wheels.

Additionally, in a case where the vehicle 1 has overturned due to an accident and a bottom portion of the damaged vehicle 1 faces a following vehicle side, emitting lights toward the lower side of the side surface of the vehicle 1 enables the following vehicle to be aware of presence of the damaged vehicle 1 and detect a danger.

Besides turning on/off the grip portion lights 14 based on a direction indicator operation, a hazard switch operation, and a back gear operation effected by a driver, it is also possible to consider a system that the grip portion lights 14 automatically emit lights when predetermined conditions are detected. The predetermined conditions described above are a condition that performing lighting is recommended or a condition that lighting should be performed, and various conditions can be considered. For example, if an impact shock of the vehicle 1 caused by an accident has been sensed, automatically lighting the grip portion lights 14 can be considered. Alternatively, when a driver is going to unlock the door, a mode of automatically lighting the grip portion lights 14 to emit lights to feet can be also considered. The above-described automatic lighting system and a manual operation system, e.g., the direction indicator operation, the hazard switch operation, and the back gear operation can coexist.

When the automatic lighting system is adopted for the grip portion lights 14, even if a driver or a passenger of the damaged vehicle 1 who has been injured or lost in abstraction due to, e.g., an accident lacks an appropriate response capability to the accident, the automatic lighting of the grip portion lights 14 enables other vehicles to automatically recognize presence of the damaged vehicle 1. Further, when the grip portion 13 is brightly shown on the unlocking stage before getting in the vehicle, the door knob part 10 can be easily recognized even in the dark, and safety can be assured. It is to be noted that, in case of, e.g., automatic lighting effected due to an accident, a mode of increasing luminous energy of the grip portion lights 14 beyond that in a normal state to further assuredly inform the outside of presence of the vehicle 1 can be also considered.

Furthermore, in the vehicle lighting system according to the second embodiment including the grip portion lights 14, a mode including a blinking pattern control device and an emergency sound generation device can be considered like the first embodiment.

### EMBODIMENT 3

FIG. 4 is a perspective view showing a third embodiment of a vehicle lighting system according to the present invention.

A vehicle lighting system according to this embodiment includes a door mirror light 17 at a predetermined position of a frame body 16 in a door mirror 15 of a vehicle 1 in addition to the first embodiment. The door mirror light 17 emits light to a rear side, and an operation of putting a gearshift lever into reverse (backward movement) basically enables the door mirror light 17 to emit light in tandem with lighting of the backing light.

It is to be noted that, since a later-described lighting effect of the door mirror light 17 is exercised in the dark, a mode of linking with a small light (a width indicator) or a larger light only when the small light or a larger light alone is lighted may be adopted.

Although an LED is preferably used for the door mirror light 17, the present invention is not restricted in particular, and the number of the door mirror light 17 is one or more and not restricted.

Additionally, as regards a lighting mode of the door mirror light 17, since the door mirror light 17 is linked with the backing light, a mode of emitting lights without blinking is desirable.

Further, as to a color of the door mirror light 17, using the same color as the backing light is preferable, but the color is not restricted in particular.

When the above-described door mirror light 17 is provided, the light is emitted from a front side of the vehicle 1 toward a rear side of a side surface. Therefore, in case of moving the vehicle 1 backward in the dark, e.g., at night, the light is emitted to the rear side of the side surface of the vehicle 1, and a driver can readily recognize an obstacle or a gully near rear wheels.

Besides turning on/off the door mirror light 17 by the back gear operation of the driver, a system that lighting is automatically effected when predetermined conditions are detected can be also considered. The predetermined conditions described above are a condition that performing lighting is recommended or a condition that lighting should be performed, and various conditions can be considered. For example, if an impact shock of the vehicle 1 caused by an accident has been sensed, automatically lighting the door mirror light 17 can be considered. Alternatively, a driver is going to unlock the door, a mode of automatically lighting the door mirror light 17 to emit the light to the side surface of the vehicle 1 can be also considered. The above-described automatic lighting system and a manual operation system, e.g., the back gear operation can coexist.

When the automatic lighting system is adopted for the door mirror light 17, even if a driver or a passenger of the damaged vehicle 1 who has been injured or lost in abstraction due to, e.g., an accident lacks an appropriate response capability to the accident, the automatic lighting of the door mirror light 17 enables other vehicles to automatically recognize presence of the damaged vehicle 1. Further, when the light is emitted to the side surface of the vehicle 1 on the unlocking stage before getting in the vehicle, it is easy to approach the vehicle 1 even in the dark, and safety can be assured. It is to be noted that, in case of, e.g., automatic lighting effected due to an accident, a mode of increasing luminous energy of the door mirror light 17 beyond that in a normal state to further assuredly inform the outside of presence of the vehicle 1 can be also considered.

Meanwhile, in the vehicle lighting system according to the third embodiment including the door mirror light 17, a mode including a blinking pattern control device and an emergency sound generation device can be considered like the first and second embodiments.

### EMBODIMENT 4

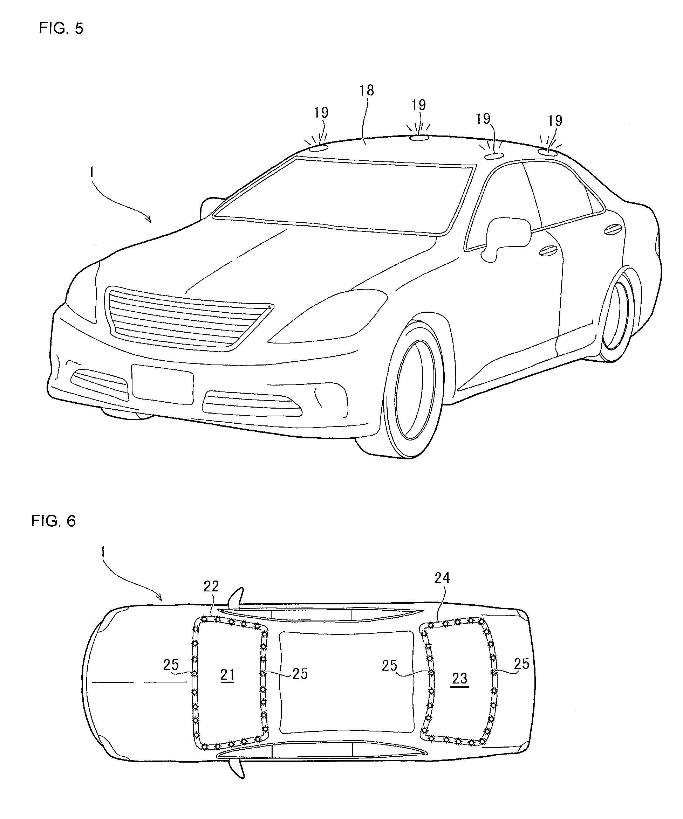

FIG. 5 is a perspective view showing a fourth embodiment of the vehicle lighting system according to the present invention.

A vehicle lighting system according to this embodiment includes ceiling lights 19 at predetermined positions on a ceiling portion 18 of a vehicle 1 in addition to the first embodiment. The ceiling lights 19 emit lights toward an upper side of the vehicle 1, and an automatic lighting system is adopted without being dependent on a manual operation. That is, the ceiling lights 19 are not necessary during normal traveling.

LEDs are preferably used for the ceiling lights 19, but the present invention is not restricted thereto in particular, and the number of the ceiling lights 19 is one or more and not restricted.

Furthermore, a lighting mode of the ceiling lights 19 is arbitrary, namely, blinking may or may not be performed since the ceiling lights 19 emit lights independently from other existing lights.

Moreover, various colors can be considered as a color of the ceiling lights 19, the color is not restricted in particular.

When the above-described ceiling lights 19 are provided, lights are emitted to the upper side from the ceiling portion 18 of the vehicle 1. Therefore, when the vehicle 1 has overturned due to an accident and the ceiling portion 18 of the damaged vehicle 1 faces a following vehicle side, emitting lights to the upper side of the vehicle 1 enables following vehicles to recognize presence of the damaged vehicle 1 and detect a danger.

The automatic lighting system that lighting is automatically performed when predetermined conditions are detected is adopted for the ceiling lights 19. The predetermined conditions described above are a condition that performing lighting is recommended or a condition that lighting should be performed, and various conditions can be considered. For example, if an impact shock of the vehicle 1 caused by an accident has been sensed, automatically lighting the ceiling lights 19 can be considered.

When the automatic lighting system is adopted for the ceiling lights 19, even if a driver or a passenger of the damaged vehicle 1 who has been injured or lost in abstraction due to, e.g., an accident lacks an appropriate response capability to the accident, the automatic lighting of the ceiling lights 19 enables other vehicles to automatically recognize presence of the damaged vehicle 1.

Meanwhile, in the vehicle lighting system according to the fourth embodiment including the ceiling lights 19, a mode including a blinking pattern control device and an emergency sound generation device can be considered like the first to third embodiments.

### EMBODIMENT 5

FIG. 6 is an explanatory view showing a fifth embodiment of the vehicle lighting system according to the present invention.

A vehicle lighting system according to this embodiment includes window frame lights 25 at predetermined positions on window frames 22 and 24 of one or both of a windshield 21 and rear glass 23 of a vehicle 1 in addition to the first embodiment. The window frame lights 25 emit lights to an upper side of the vehicle 1, and an automatic lighting system is adopted without being dependent on a manual operation. That is, the window frame lights 25 are not necessary during normal traveling.

LEDs are preferably used for the window frame lights 25, but the present invention is not restricted thereto, and the number of the window frame lights 25 is one or more and not restricted.

Furthermore, a lighting mode of the window frame lights 25 is arbitrary, namely, blinking may or may not be performed since the window frame lights 25 emit lights independently from other existing lights.

Moreover, various colors can be considered as a color of the window frame lights 25, the color is not restricted in particular.

When the above-described window frame lights 25 are provided, lights are emitted to the upper side from the windshield 21 or the rear glass 23 of the vehicle 1. Therefore, when the vehicle 1 has overturned due to an accident and the ceiling portion 18 of the damaged vehicle 1 faces a following vehicle side, emitting lights to the upper side of the vehicle 1 enables following vehicles to recognize presence of the damaged vehicle 1 and detect a danger.

The automatic lighting system that lighting is automatically performed when predetermined conditions are detected is adopted for the window frame lights 25. The predetermined conditions described above are a condition that performing lighting is recommended or a condition that lighting should be performed, and various conditions can be considered. For example, if an impact shock of the vehicle 1 caused by an accident has been sensed, automatically lighting the window frame lights 25 can be considered.

When the automatic lighting system is adopted for the window frame lights 25, even if a driver or a passenger of the damaged vehicle 1 who has been injured or lost in abstraction due to, e.g., an accident lacks an appropriate response capability to the accident, the automatic lighting of the window frame lights 25 enables other vehicles to automatically recognize presence of the damaged vehicle 1.

Meanwhile, in the vehicle lighting system according to the fifth embodiment including the window frame lights 25, a mode including a blinking pattern control device and an emergency sound generation device can be considered like the first to fourth embodiments.

### EMBODIMENT 6

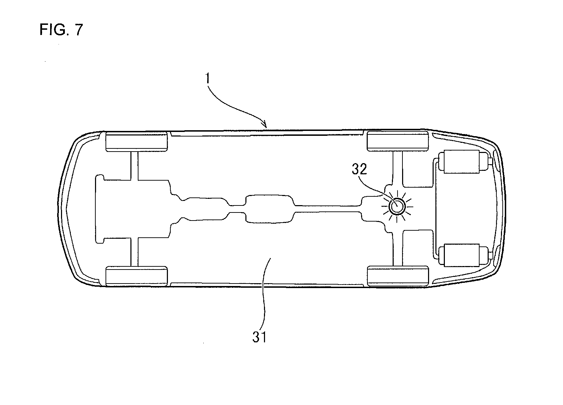

FIG. 7 is a perspective view showing a sixth embodiment of a vehicle lighting system according to the present invention.

A vehicle lighting system according to this embodiment includes a bottom portion light 32 at a predetermined position of a bottom portion 31 of a vehicle 1 in addition to the first embodiment. The bottom portion light 32 emits light to a lower side of the vehicle 1, and an automatic lighting system is adopted without being dependent on a manual operation. That is, the bottom portion light 32 is not necessary during normal traveling.

An LED is preferably used for the bottom portion light 32, but the present invention is not restricted thereto, and the number of the bottom portion light 32 is one or more and not restricted.

Furthermore, a lighting mode of the bottom portion light 32 is arbitrary, namely, blinking may or may not be performed since the bottom portion light 32 emits light independently from other existing lights.

Moreover, various colors can be considered as a color of the bottom portion light 32, the color is not restricted in particular.

When the above-described bottom portion light 32 is provided, light is emitted to the lower side from the bottom portion 31 of the vehicle 1. Therefore, when the vehicle 1 has overturned due to an accident and the bottom portion 31 of the damaged vehicle 1 faces a following vehicle side, emitting light to the lower side of the vehicle 1 enables following vehicles to recognize presence of the damaged vehicle 1 and detect a danger.

The automatic lighting system that lighting is automatically performed when predetermined conditions are detected is adopted for the bottom portion light 32. The predetermined conditions described above are a condition that performing lighting is recommended or a condition that lighting should be performed, and various conditions can be considered. For example, if an impact shock of the vehicle 1 caused by an accident has been sensed, automatically lighting the bottom portion light 32 can be considered.

When the automatic lighting system is adopted for the bottom portion light 32 as described above, even if a driver or a passenger of the damaged vehicle 1 who has been injured or lost in abstraction due to, e.g., an accident lacks an appropriate response capability to the accident, the automatic lighting of the bottom portion light 32 enables other vehicles to automatically recognize presence of the damaged vehicle 1.

Meanwhile, in the vehicle lighting system according to the sixth embodiment including the bottom portion light 32, a mode including a blinking pattern control device and an emergency sound generation device can be considered like the first to fifth embodiments.

It is to be noted that mud stains and others are apt to stick to the bottom portion light 32 during normal traveling since the bottom portion light 32 is provided on the bottom portion 31 of the vehicle 1. Since the bottom portion light 32 does not emit light unless the predetermined conditions, e.g. , an emergency are detected, it is desirable to cover the bottom portion light 32 with a cover body during normal traveling and avoid adhesion of stains. However, in this case, the cover body must be automatically removed when the predetermined conditions are detected.

### INDUSTRIAL APPLICABILITY

The vehicle lighting system according to the present invention enables emitting lights in every direction, i.e., sending an SOS in all directions by providing the lights on every surface of the vehicle 1, e. g. , the door knob part 10 , the ceiling portion 18, the window frames 22 and 24, and the bottom portion 31. Therefore, when an emergency, e.g., an accident is happening to the vehicle 1, since the lights emitted from the vehicle 1 can be visually confirmed from other vehicles present in all directions under any circumstances, e.g., spin or overturn of the vehicle 1, following vehicles can detect a danger and avoid a secondary disaster or multiple accidents such as rear-end collisions, and it can be understood that the industrial applicability of the present invention is considerable.

### REFERENCE SIGNS LIST

- 1: vehicle
- 10: door knob part
- 11: concave portion surface
- 12: concave portion light
- 13: grip portion
- 14: grip portion light
- 15: door mirror
- 16: frame body
- 17: door mirror light
- 18: ceiling portion
- 19: ceiling light
- 21: windshield
- 22: window frame
- 23: rear glass
- 24: window frame
- 25: window frame light
- 31: bottom portion
- 32: bottom portion light

## Claims

1. A lighting system in a vehicle, comprising:
a concave portion light, which emits light to a lateral side, provided on a surface of a concave portion that allows fingers to be inserted therein behind a grip portion in a door knob part,
wherein the concave portion light emits the light in accordance with a direction indicator operation or a hazard switch operation or the concave portion light automatically emits the light when predetermined conditions are detected.

2. The vehicle lighting system according to claim 1, comprising:
a grip portion light, which emits light to the lateral side or a lower side, provided on the grip portion in the door knob part,
wherein the grip portion light emits the light in accordance with the direction indicator operation, the hazard switch operation, or a back gear operation, or the grip portion light automatically emits the light when the predetermined conditions are detected.

3. The vehicle lighting system according to claim 1 or 2, comprising:
a door mirror light, which emits light to a rear side, provided at a predetermined position on a frame body of a door mirror,
wherein the door mirror light emits the light in accordance with the back gear operation or the door mirror light automatically emits the light when the predetermined conditions are detected.

4. The vehicle lighting system according to any one of claims 1 to 3, comprising:
a ceiling light, which emits the light to an upper side, provided at a predetermined position on a vehicle ceiling portion,
wherein the ceiling light automatically emits light when the predetermined conditions are detected.

5. The vehicle lighting system according to any one of claims 1 to 4, comprising:
a window frame light, which emits light to the upper side, provided at a predetermined position on each window frame of one or both of a windshield or a rear glass,
wherein the window frame light automatically emits the light when the predetermined conditions are detected.

6. The vehicle lighting system according to any one of claims 1 to 5, comprising:
a bottom portion light, which emits light to the lower side, provided at a predetermined position on a vehicle bottom portion,
wherein the bottom portion light automatically emits the light when the predetermined conditions are detected.

7. The vehicle lighting system according to any one of claims 1 to 6, comprising:
a blinking pattern control device,
wherein blinking patterns of the various kinds of lights that automatically emit the lights when the predetermined conditions are detected are controlled.

8. The vehicle lighting system according to any one of claims 1 to 7, comprising:
an emergency sound generation device,
wherein emergency sound is generated from the emergency sound generation device in tandem with the various kinds of lights that automatically emit the lights when the predetermined conditions are detected.
